# EUROPEAN PATENT SPECIFICATION

(11) **EP 2 611 572 B1**
(45) Date of publication and mention of the grant of the patent: **15.01.2020**
(21) Application number: 11822228.0
(22) Date of filing: 02.09.2011
(51) Int. Cl.: B24B 7/18, E04F 21/24, F16D 3/72, F16D 3/79, B24B 41/047

(54) **FLEXIBLY CARRIED GRINDING DISC**
FLEXIBLE AUSGEFÜHRTE SCHLEIFSCHEIBE
DISQUE ABRASIF À MONTAGE FLEXIBLE

(30) Priority: 03.09.2010 SE 1050908
(43) Date of publication of application: 10.07.2013
(73) Proprietor: Scanmaskin Sverige AB, 437 22 Lindome (SE)
(72) Inventor: PERSSON, Martin, SE-413 24 Göteborg (SE); BERGSTRAND, Claes-Göran, SE-429 33 Kullavik (SE)
(74) Representative: Zacco Sweden AB
(86) International application number: PCT/SE2011/051057
(87) International publication number: WO 2012/030293

(56) References cited:
- EP-A1- 0 037 359
- EP-A1- 0 173 814
- EP-A1- 1 669 162
- EP-A1- 1 679 157
- DE-A1-102008 064 081
- US-A- 2 435 058
- US-A1- 2006 172 667
- US-A1- 2010 190 421
- US-B1- 6 263 605
- US-B1- 6 769 969

## Description

The present invention relates to a grinding disc device for a floor grinding machine having an outgoing rotatable output shaft. Such a device is known for example from EP 1 669 162 A1, which represents the closest prior-art to the subject-matter of the appended claim 1 and is the basis for its preamble. It is already known to let the grinding disc be carried in such a way, that it can move to some extent when uneven floors are grinded. Then, the grinding disc has been carried by means only of a flexible sleeve of rubber, or in combination with fabric of desired textile, i.e. the type of rubber bushings, which exhibit carriers of different types of fabric associated with the output shaft of the grinding machine and a plate in order to be able to take up unevenness in the floor. Also various types of universal joints are known.

The security for the persons using such grinding discs has not been so good. Frequently, they carry out work, where it is uncertain if the surface which they grind contains hidden and/or visible, protruding and/or hard objects, which cannot easily be grinded away. On such occasions the known flexible hubs have been damaged and broken due to hard external influences. For example, heat is not good to rubber material which has been used. Furthermore, it has not been easy to change the flexibility of known grinding discs, for example in order to perform different types of work, which require different types of hardness and flexibility.

The main object of the present invention is to solve, among other things, the problems described above by simple and safely functioning means.

Said object is reached by means of a device according to the present invention as defined by the appended claim 1. Preferable embodiments are defined in the dependent claims.

The invention is described in the following as a preferred embodiment with reference to the accompanying drawings, in which:

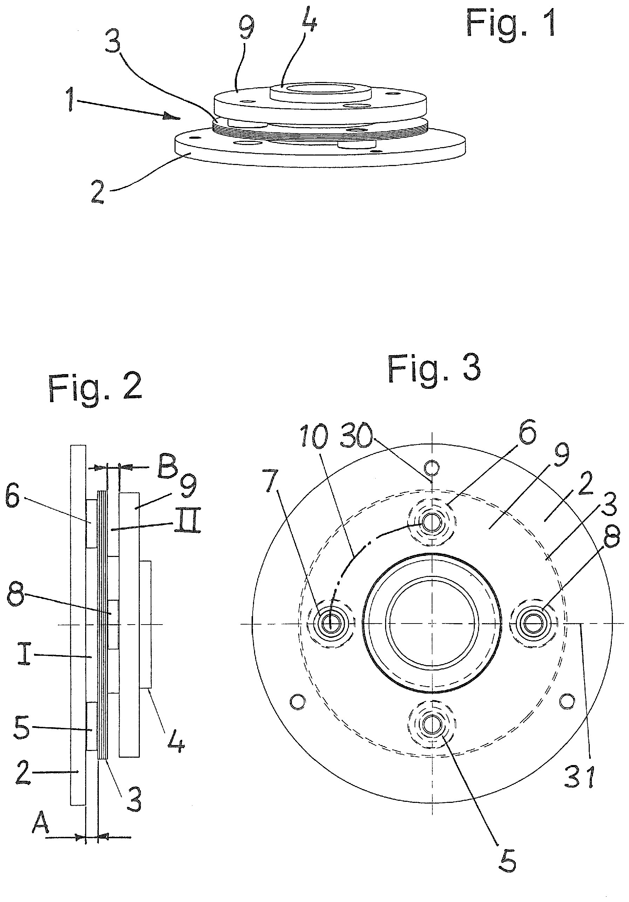

Fig. 1 is a perspective view of a grinding disc with a flexible hub according to the invention,
Fig. 2 is a lateral view of said grinding disc with associated device,
Fig. 3 is a plan view of said grinding disc seen from it underside,

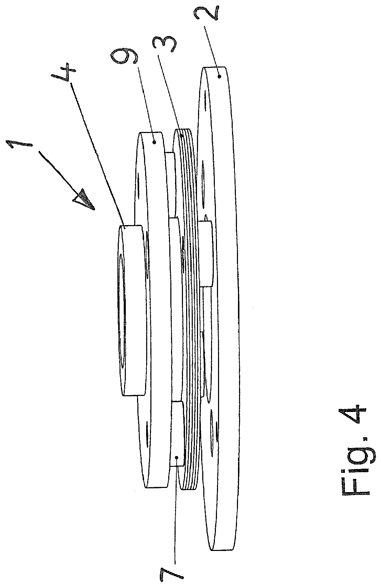

Fig. 4 is a perspective view of a grinding disc with included parts, and

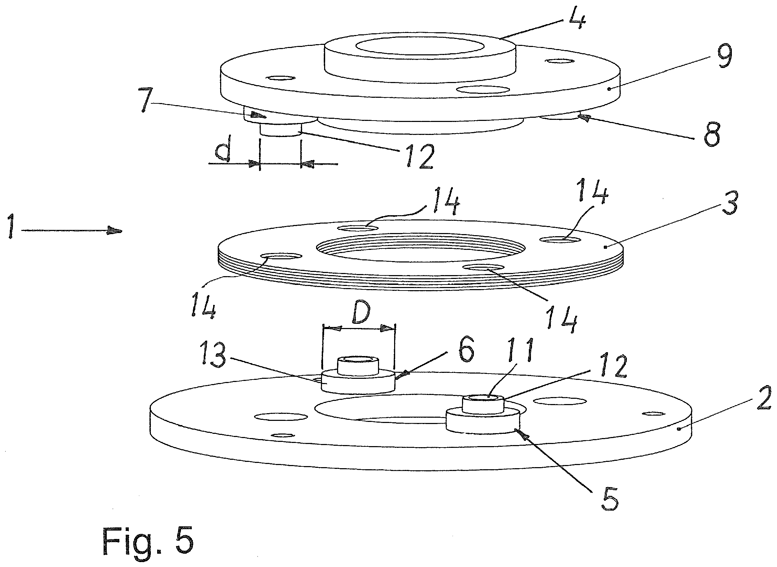

Fig. 5 is an exploded view of such a grinding disc according to the invention.

The invention solves the problem when one or more discs are mounted on a grinding machine, where the disc is to follow the surface being grinded, and where the output shaft from the grinding machine is relatively rigid in relation to the surface intended to be grinded, and where, thus, a flexible disc is needed to be able to take up unevenness of the surface in an efficient and safe way, and in order to achieve efficient finishing.

By means of the present invention it is possible to see to it in a reliable and safe way, that the lower grinding disc, which is made of steel, can move to a certain extent in different angles in relation to the shaft of the grinding disc. This is achieved by means of one or more packed discs of spring steel, which are held by means of a number of spacing bodies, so called spacer blocks, which are four in number. The height of these spacing blocks limits the flexibility and bendability of the spring steel discs.

The invention makes it possible to increase the safety for the persons using the grinding machine. They can perform work, where it is uncertain if the surface is free from hidden or protruding harder objects, without running the risk of the disc breaking due to such external influences.

The operator can now also easily change the number of flexible discs in order to be able to perform various types of work demanding different types of hardness and flexibility. Neither does heat being generated now destroy the putting together.

More exactly, the invention relates to a device 1 at a grinding disc 2 for a floor grinding machine, and comprises a rotatable, from the machine outgoing shaft. According to the invention a lower grinding disc 2 is flexibly carried by means of one or more flexible, put together discs 3 located in the middle, which are arranged between the lower grinding disc 2 and a rotatable output shaft 4.

Said put together, flexible discs 3 consist of metal material, more exactly of spring steel or similar material. Spacer blocks 5-8 are arranged to keep said flexible discs 3 at a distance A, B from the grinding disc 2 and from the shaft 4 and its associated disc 9, respectively. The spacer blocks 5-8 are distributed in pairs 5-6 and 7-8, respectively, along a common periphery 10 on either side I; II of the flexible discs 3. Preferably, said spacer blocks 5-8 are formed by cylinders of metal with a central screw hole 11, and which have a smaller diameter d at one of their ends 12 compared with their opposite end 13, where the diameter D is larger. The portion of the spacer block 5-8 having a smaller diameter d is receivable in a fitting recess 14 in said opposite, locked, flexible disc portion 3. The other end is screwed on to the grinding disc 2.

Said spacer blocks 5-8 are equally distributed along the periphery of the flexible discs 3, whereby the upper spacer blocks 7,8 are formed by two blocks, whereby an imagined first line defined by the two upper spacer blocks is perpendicular to an imagined second line defined by the lower spacer blocks 5,6, which are also formed by two blocks. Thereby, more than one pack of flexible discs 3 with intermediate spacer blocks 5-8 may be arranged at the grinding disc 2.

Said flexible discs 3 are attached to the grinding disc 2 and to the output shaft 4, 9 from the machine, respectively, by means of not shown screws.

The nature and the functioning of the device should have been understood from the above description and the accompanying drawings. Thus, the grinding disc 2 with associated grinding segments, which are preferably releasably attached thereto, may be resilient around the spacer blocks arranged in pairs along an imagined first line, which coincides with a diameter 30, and around an imagined second line, which is perpendicular to said first line, and which in its turn coincide with a perpendicular diameter 31 of said discs. It is also possible to choose an angle that is not right, especially if several separate or packs of flexible spring discs 3 are kept in a common stack and pack according to the invention.

Of course, the invention is not limited to the embodiment described above and illustrated in the accompanying drawings. Modifications are possible, especially as far as the nature of the different parts is concerned, or by using equivalent technique, without departing from the scope of the invention as it is defined by the appended claims.

## Claims

1. A grinding disc device for a floor grinding machine having an outgoing rotatable output shaft, where the grinding disc device comprises a disc (9) associated with the rotatable output shaft and a lower grinding disc (2) flexibly carried by one or several flexible discs (3), where the one or several flexible discs (3) are arranged between the lower grinding disc (2) and the disc (9) associated with the rotatable output shaft, **characterized in that** the grinding disc device further comprises spacer blocks (5-8) arranged to keep said flexible discs (3) at a distance (A, B) from the grinding disc (2) and the disc (9) associated with the shaft respectively, and wherein the spacer blocks (5-8) are formed by cylinders with a central screw hole (11) and with a portion having a diameter (d) at one cylinder end, the diameter (d) being smaller than the diameter of the rest of the cylinder, and wherein the portion of the spacer block (5-8) having the smaller diameter (d) is receivable in a recess (14) in the one or several flexible discs (3).

2. Device according to Claim 1, **characterized in that** the one or several flexible discs (3) consist of metal material.

3. Device according to Claim 2, **characterized in that** the one or several flexible discs (3) consist of spring steel.

4. Device according to anyone of the preceding Claims, **characterized in that** the spacer blocks (5-8) are distributed along a common periphery (10) on either side (I, II) of the one or several flexible discs (3).

5. Device according to anyone of the preceding Claims, **characterized in that** said spacer blocks (5-8) are equally distributed along the periphery of the one or several flexible discs (3), whereby the upper spacer blocks (7, 8) are formed by two blocks, and whereby the lower spacer blocks (5, 6) are formed by two blocks, where an imagined line defined by the upper spacer blocks (7, 8) is perpendicular to an imagined line defined by the lower spacer blocks (5, 6).

6. Device according to anyone of the preceding Claims, **characterized in that** more than one pack of one or several flexible discs (3) with intermediate spacer blocks (5-8) are arranged at the grinding disc (2).

7. Device according to anyone of the preceding Claims, **characterized in**that said one or several flexible discs (3) are attached to the lower grinding disc (2) and to the disc (9) associated with the rotatable output shaft, respectively, by means of screws.

## Patentansprüche

1. Schleifscheibeneinrichtung für eine Bodenschleifmaschine mit einer ausgehend drehbare Ausgangswelle, wobei die Schleifscheibeneinrichtung eine Scheibe (9), die mit der drehbaren Ausgangswelle zusammenhängt, und eine untere Schleifscheibe (2), die durch eine oder mehrere flexible Scheiben (3) flexibel getragen wird, umfasst, wobei die eine oder mehrere flexible Scheiben (3) zwischen der unteren Schleifscheibe (2) und der mit der drehbaren Ausgangswelle zusammenhängenden Scheibe (9) angeordnet sind, **dadurch gekennzeichnet, dass** die Schleifscheibeneinrichtung weiter Abstandblöcke (5-8) umfasst, die dafür eingerichtet sind, die flexiblen Scheiben (3) in einem Abstand (A, B) von der Schleifscheibe (2) bzw. der mit der Welle zusammenhängenden Scheibe (9) zu halten, und wobei die Abstandsblöcke (5-8) durch Zylinder mit einem mittigen Schraubenloch (11) und mit einem Teil mit einem Durchmesser (d) an einem Zylinderende gebildet sind, wobei der Durchmesser (d) kleiner als der Durchmesser des restlichen Zylinders ist, und wobei der Teil der Abstandsblöcke (5-8) mit dem kleineren Durchmesser (d) in einer Ausnehmung (14) in der einen oder mehreren flexiblen Scheiben (3) aufnehmbar ist.

2. Einrichtung nach Anspruch 1, **dadurch gekennzeichnet, dass** die eine oder mehrere flexible Scheiben (3) aus Metallmaterial besteht bzw. bestehen.

3. Einrichtung nach Anspruch 2, **dadurch gekennzeichnet, dass** die eine oder mehrere flexible Scheiben (3) aus Federstahl besteht bzw. bestehen.

4. Einrichtung nach einem der vorgehenden Ansprüche, **dadurch gekennzeichnet,**
**dass** die Abstandsblöcke (5-8) entlang einem gemeinsamen Umfang (10) auf beiden Seiten (I, II) der einen oder mehreren flexiblen Scheiben (3) verteilt sind.

5. Einrichtung nach einem der vorgehenden Ansprüche, **dadurch gekennzeichnet, dass** die Abstandsblöcke (5-8) entlang dem Umfang der einen oder mehreren flexiblen Scheiben (3) gleichmäßig verteilt sind, wobei die oberen Abstandsblöcke (7, 8) durch zwei Blöcke gebildet sind, und wobei die unteren Abstandsblöcke (5, 6) durch zwei Blöcke gebildet sind, wobei eine gedachte Linie, die durch die oberen Abstandsblöcke (7, 8) definiert ist, zu einer gedachten Linie, die durch die unteren Abstandsblöcke (5, 6) definiert ist, senkrecht ist.

6. Einrichtung nach einem der vorgehenden Ansprüche, **dadurch gekennzeichnet, dass** mehr als ein Bündel der einen oder mehreren flexiblen Scheiben (3) mit zwischenliegenden Abstandsblöcken (5-8) an der Schleifscheibe (2) angeordnet sind.

7. Einrichtung nach einem der vorgehenden Ansprüche, **dadurch gekennzeichnet, dass** die eine oder mehrere flexible Scheiben (3) an einer unteren Schleifscheibe (2) bzw. an der mit der drehbaren Ausgangswelle zusammenhängenden Scheibe (9) mittels Schrauben befestigt sind.

## Revendications

1. Dispositif à disque de broyage pour une machine de broyage de sol comprenant un arbre rotatif sortant, le dispositif à disque de broyage comprenant un disque (9) associé à l'arbre rotatif sortant et un disque de broyage inférieur (2) porté de manière flexible au moyen d'un ou de plusieurs disques flexibles (3), l'un ou plusieurs des disques flexibles (3) étant arrangés entre le disque de broyage inférieur (2) et le disque (9) associé à l'arbre rotatif sortant, **caractérisé en ce que** le dispositif à disque de broyage comprend en outre des blocs entretoises (5-8) agencés pour maintenir lesdits disques flexibles (3) à une distance (A, B) respectivement du disque de broyage (2) et du disque (9) associé à l'arbre rotatif sortant, et dans lequel les blocs entretoises (5-8) sont formés par des cylindres avec un trou de vis central (11) et avec une partie ayant un diamètre (d) à l'une extrémité de cylindre, le diamètre (d) étant inférieur au diamètre du reste du cylindre, et dans lequel la partie des blocs entretoises (5-8) ayant le moindre diamètre (d) peut être reçue dans un évidement (14) dans l'un ou plusieurs des disques flexibles (3).

2. Dispositif selon la revendication 1, **caractérisé en ce que** l'un ou plusieurs des disques flexibles (3) sont constitués d'un matériau métallique.

3. Dispositif selon la revendication 2, **caractérisé en ce que** l'un ou plusieurs des disques flexibles (3) sont constitués d'acier à ressort.

4. Dispositif selon l'une quelconque des revendications précédentes, **caractérisé en ce que** les blocs entretoises (5-8) sont répartis le long d'une périphérie commune (10) de part et d'autre (I, II) de l'un ou de plusieurs des disques flexibles (3).

5. Dispositif selon l'une quelconque des revendications précédentes, **caractérisé en ce que** lesdits blocs entretoises (5-8) sont répartis uniformément le long de la périphérie de l'un ou de plusieurs des disques flexibles (3), les blocs entretoises supérieurs (7, 8) étant formés par deux blocs, et les blocs entretoises inférieurs (5, 6) étant formés par deux blocs, une ligne imaginaire définie par les blocs entretoises supérieurs (7, 8) étant perpendiculaire à une ligne imaginaire définie par les blocs entretoises inférieurs (5, 6).

6. Dispositif selon l'une quelconque des revendications précédentes, **caractérisé en ce que** plus d'un paquet de l'un ou de plusieurs des disques flexibles (3) et de blocs entretoises intermédiaires (5-8) sont disposés au niveau du disque de broyage (2).

7. Dispositif selon l'une quelconque des revendications précédentes, **caractérisé en ce que** l'un ou plusieurs desdits disques flexibles (3) sont fixés respectivement au disque de broyage (2) et au disque (9) associé à l'arbre rotatif sortant, au moyen de vis.
